# EUROPÄISCHE PATENTANMELDUNG

(11) **EP 1 035 153 A2**
(43) Veröffentlichungstag der Anmeldung: **13.09.2000**
(21) Anmeldenummer: 00103948.6
(22) Anmeldetag: 25.02.2000
(51) Int. Cl.: C08G 77/445

(54) **Carbonatgruppen enthaltende, mit linearen Polyestern modifizierte Polysiloxane und ihre Verwendung als Zusatzstoffe in Beschichtungen**

(30) Priorität: 09.03.1999 DE 19910975
(71) Anmelder: Goldschmidt AG, 45127 Essen (DE)
(72) Erfinder: Josten, Wolfgang, Dr., 53639 Königswinter (DE); Silber, Stefan, Dr., 47804 Krefeld (DE)

(57) **Zusammenfassung**

Die Erfindung betrifft Carbonatgruppen enthaltende, mit linearen Polyestern modifizierte Polysiloxane und ihre Verwendung als Zusatzmittel für Beschichtungen, insbesondere strahlenhärtende Beschichtungsstoffe.

## Beschreibung

Die Erfindung betrifft Carbonatgruppen enthaltende, mit linearen Polyestern modifizierte Polysiloxane und ihre Verwendung als Zusatzstoffe in Beschichtungen.

Die erfindungsgemäßen Verbindungen fördern den Verlauf, erzeugen antiadhäsive Eigenschaften und erhöhen die Gleitfähigkeit und Kratzfestigkeit der mit ihnen versetzten Beschichtungen.

Beschichtungen im Sinne der vorliegenden Erfindung sind insbesondere Lacke. Diese können verschiedenartig formuliert sein und somit unter anderem Klarlacke, pigmentierte oder mit Farbstoffen versehene Lacke sein. Als flüssige Phase können sie organische Lösemittel und/oder Wasser enthalten, wie dies in Abhängigkeit von den verwendeten Bindemitteln als Stand der Technik bekannt ist. Die erfindungsgemäßen Lacke müssen jedoch nicht notwendigerweise eine flüssige Phase enthalten, sondern können auch sogenannte Pulverlacke sein. Ebenso können die Lacke die üblichen dem Stand der Technik entsprechenden Zusatzstoffe enthalten, wie zum Beispiel Netz- und Dispergiermittel, Füllstoffe, Entschäumer usw. und nach unterschiedlichen, dem Stand der Technik gemäßen Verfahren aushärten. Besonders vorteilhaft können die erfindungsgemäßen Verbindungen in hitzehärtbaren Lacken eingesetzt werden, in denen die Carbonatgruppen enthaltenden, mit linearen Polyestern modifizierten Polysiloxane unter den Aushärtbedingungen bis zu 300 °C besonders stabil sind.

Es ist allgemein bekannt, daß Polysiloxane Beschichtungsstoffen, wie Lacken, zugesetzt werden, um schmutzabweisende Oberflächen zu erzielen oder die Gleitfähigkeit und Kratzfestigkeit solcher Oberflächen zu verbessern. Inzwischen ist eine Vielzahl von Polysiloxanen und auch organomodifizierten Siloxanen im Markt etabliert. Insbesondere polyoxyalkylenmodifizierte Polysiloxane haben sich als Zusatzstoff zur Optimierung der Oberflächeneigenschaften bewährt. Polyoxyalkylene sind jedoch bei Temperaturen ab 150 °C unter Sauerstoffeinfluß nicht stabil. Der dann einsetzende Abbau der Polymerkette führt häufig durch die Freisetzung von nicht ausreichend organomodifizierten Polysiloxanen zu Störungen in der Beschichtungsmasse bzw. insbesondere an deren Oberfläche. Dem kann man entgegenwirken, wenn man sich die allgemein bekannte erhöhte thermische Stabilität von polyestermodifizierten Siloxanen im Vergleich zu alkylen- oder oxyalkylenmodifizierten Siloxanen zunutze macht, wie dies zum Beispiel von I. Yilgör, J.E. McGrath, Adv. Polym. Sci., 86, 1 (1988) beschrieben ist.

Eine Vielzahl von Publikationen beschäftigt sich mit der Herstellung und Verwendung von im Regelfall verzweigten siliconmodifizierten Polyestern zur Herstellung von Bindemitteln. Solche Verbindungen enthalten im Regelfall reaktive Gruppen, welche die Gesamtmischung zu einer Vernetzungs- und damit Härtungsreaktion befähigen. Diese funktionellen Gruppen sind häufig siliciumgebunden, wie zum Beispiel US-A-5 552 223 lehrt. Solche siliconmodifizierten Bindemittel sind mit den in dieser Erfindung beschriebenen Carbonatgruppen enthaltenden, mit linearen Polyestern modifizierten Polysiloxanen nicht vergleichbar, da sie eine eigene Bindemittelklasse bilden und nicht als in geringen Mengen wirksamer Zusatzstoff eingesetzt werden.

Eine ähnliche Vielfalt findet sich mit Bezug auf die Herstellung und Verwendung von Siliconpolyestern als Elastomere und Thermoplaste, wie zum Beispiel in EP-A-0 146 327 ausgeführt wird. Dort beschriebene Polysiloxan-Polyester-Blockcopolymere sind mit Bezug auf ihre mechanischen Eigenschaften zur weiteren Verwendung als formgebende Kunststoffe optimiert und ebenfalls weder sinngemäß noch von ihrer Wirksamkeit her mit den in dieser Erfindung beschriebenen Carbonatgruppen enthaltenden, mit linearen Polyestern modifizierten Polysiloxanen vergleichbar.

Die Herstellung von linearen, blockartig aufgebauten, mit linearen Polyestern modifizierten Polysiloxanen erfolgt üblicherweise durch Hydrosilylierung, um eine Verknüpfung zwischen einem alkenylfunktionellen Polyestersegment und einem hydrosilylfunktionellen Polysiloxan zu erreichen, wie dies in DE-A-34 27 208 dargelegt wird. Hier ist als nachteilig jedoch insbesondere die aufwendige Herstellung eines, für die Hydrosilylierungsreaktion geeigneten, alkenylfunktionellen Polyestersegmentes zu nennen.

Andere Verfahren zur Herstellung von linearen, blockartig aufgebauten, mit linearen Polyestern modifizierten Polysiloxanen weisen diesen Nachteil nicht auf und sind schon seit geraumer Zeit Stand der Technik. So ist zum Beispiel die Reaktion von chloro- oder dimethylaminofunktionellen Polysiloxanen zu mit linearen Polyestern modifizierten Polysiloxanen in DE-A-20 01 945 beschrieben. Ebenso kann man auch von carboxylfunktionellen Polysiloxanen ausgehen, wie in DE-A-35 02 928 ausgeführt wird.

Zur Herstellung solcher Materialien werden zum Beispiel zunächst lineare, aminoalkylfunktionelle Polysiloxane mit Dicarbonsäuredialkylestern zur Reaktion gebracht. Dies führt zur Bildung von über Amidbrücken verknüpften, linearen α,ω-alkylcarboxylatfunktionalisierten Polysiloxanen, welche dann mit linearen Diolen und linearen Dicarbonsäuredialkylestern weiter zur Reaktion gebracht werden. In DE-A-34 27 208 und DE-A-35 35 283 wird dargelegt, wie man, auch von hydroxyfunktionellen Polysiloxanen ausgehend, durch direkte Kondensations- bzw. Additionsreaktionen mit weiteren Diolkomponenten und Carbonsäure(derivate)n lineare, blockartig aufgebaute, mit linearen Polyestern modifizierte Polysiloxane herstellen kann.

Sehr analog zeigt auch US-A-5 488 123 wie, ausgehend von linearen Hydroxyalkylpolysiloxanen, im Sinne einer Kondensationsreaktion bei Endtemperaturen bis zu 260 °C unter Zugabe von Diolen und Dicarbonsäure(derivate)n rein statistisch verteilte Polykondensate des (AB)ₙA-Typs erzeugt werden.

Diese oben beschriebenen Verfahren mittels Polykondensations- bzw. -additionsreaktion weisen wesentliche Nachteile auf, die insbesondere in der Verwendung teilweise teurer oder schwer zugänglicher Polysiloxanderivate und Temperaturen von bis zu 260 °C, verbunden mit ausgeprägten Eigenfärbungen so gewonnener Produkte, begründet sind. Verfahren, die eine Umsetzung bei niedrigeren Temperaturen und kürzeren Reaktionszeiten vorsehen, führen leicht zur Bildung inhomogener Polymere aufgrund ungleichmäßig verteilter Polysiloxan- und Polyesterblöcke. Dies hat zur Folge, daß sich siloxanreiche Addukte mit vergleichsweise geringen Modifizierungsgraden neben entsprechenden polyesterreichen Addukten ausbilden. Solcherart inhomogene Produkte zeigen ein unzureichendes Anwendungsprofil insbesondere mit Blick auf Mischungsprobleme und Störungen der Oberfläche der Beschichtung.

Diese Problematik kann man durch die Verwendung von α,ω-Hydroxycarbonsäuren bzw. deren Lactonen umgehen, da hier, bedingt durch eine effektive Monofunktionalität des Polyesterbausteins, die Reaktion kontrollierbarer verläuft und gezielt zu A-B-A-Polyester-Polysiloxan-Polyester-Triblockcopolymerisaten führt. Insbesondere Polycaprolacton-Polysiloxan-Polycaprolacton-Siliconpolyester sind intensiv untersucht worden, wie dies zum Beispiel bei I. Yilgör, J.E. McGrath, Adv. Polym. Sci., 86, 1 (1988) zu sehen ist. Entsprechende Produkte sind kommerziell frei verfügbar (zum Beispiel Tegomer® HSi-6420 und HS-6440, Th. Goldschmidt AG, Essen). Umfassend zeigen auch EP-B-0 208 734, DE-A-34 27 208 und DE-A-35 35 283 die vielfältigen Möglichkeiten der Ringöffnungspolymerisation von Lactonen an hydroxyfunktionelle Polysiloxane und hydroxyfunktionelle Polyoxyalkylenpolysiloxane. Zur Synthese geht man von linearen Hydroxyalkylpolysiloxanen aus, die mit α,ω-Hydroxycarbonsäuren bzw. ihren Derivaten (zum Beispiel ε-Caprolacton) umgesetzt werden. Der wesentliche Vorteil dieser Synthesesequenz (Einsatz der α,ω-Hydroxycarbonsäuren und ihrer Derivate, welche einen weitestgehend strengen A-B-A-Triblockcopolymeraufbau ermöglichen) ist gleichzeitig auch ihr grundlegender Nachteil, da demzufolge logischerweise die Beschränkung auf eben diese α,ω-Hydroxycarbonsäuren und ihre Derivate als Polyesterrohstoffe besteht. Somit ist, gemäß der kommerziellen Verfügbarkeit dieser α,ω-Hydroxycarbonsäuren und ihrer Derivate der Wert dieser Synthesestrategie erheblich eingrenzt, da man mit nur wenigen Rohstoffen auskommen muß und somit in der Herstellung für spezielle Anwendungen maßgeschneiderter Verbindungen stark eingeschränkt ist.

Um insbesondere eine variable Synthesestrategie zu verfolgen, kann man von fertigen Polysiloxan- und Polyesterblöcken ausgehend eine verknüpfende Einheit zur Verbindung der beiden Strukturelemente nutzen. Wenn man exemplarisch von jeweils hydroxyalkylfunktionellen Polysiloxanen sowie Polyestern ausgeht, ist eine Vielzahl an potentiellen Verknüpfungsgliedern möglich. Beispielhaft zu nennen sind Dicarbonsäuren und ihre Derivate, Bisepoxiverbindungen und Diisocyanate. Wesentliche Nachteile dieser Verknüpfungsglieder sind im Falle der Dicarbonsäuren und ihrer Derivate die schon oben genannten hohen Temperaturen und der problematische Reaktionsverlauf, der zu inhomogenen Produkten führt. Dicarbonsäuredianhydride, wie zum Beispiel Pyromellitsäureanhydrid, reagieren zwar schon bei niederen Temperaturen, führen aber zu einer unerwünschten Aufsäuerung des Gesamtmoleküls. Im Fall der Bisepoxide als Verknüpfungsglied ist die Reaktivität der bei der Anlagerung gebildeten sekundären Hydroxylgruppe nicht zu unterdrücken, so daß man zu vernetzten Strukturen kommt. Niedermolekulare Diisocyanate sind toxikologisch bedenklich und im technischen Maßstab nur aufwendig zu kontrollieren. Toxikologisch unbedenklichere, geschützte und/oder höhermolekulare Derivate erfordern entweder wieder hohe Temperaturen, so daß unerwünschte Nebenreaktionen (zum Beispiel durch Allophanatbildung) zu Vernetzungen führen oder aber der strukturelle Einfluß des vergleichsweise hochmolekularen Diisocyanates zu einer merklichen Beeinflussung der Gesamteigenschaften des so hergestellten Polyestersiloxans führt.

Überraschenderweise wurde nun gefunden, daß Carbonatgruppen enthaltende, mit linearen Polyestern modifizierte Polysiloxane die oben beschriebenen Nachteile nicht aufweisen und diese in einfacher Weise durch die Reaktion von Kohlensäureestern mit hydroxyfunktionellen Polysiloxan- und Polyestersegmenten hergestellt werden können.

Hierbei wird durch den Einsatz von kommerziell reichhaltig verfügbaren Polyesterblöcken eine ausgesprochen ökonomische und vielfache Modifizierung der Polysiloxane ermöglicht. Die so erhaltenen Produkte zeichnen sich außerdem auch noch durch besonders geringe Eigenfärbungen und hervorragende anwendungstechnische Wirksamkeit aus.

Die Reaktion zwischen Polysiloxanen und Kohlensäurederivaten zur Herstellung von Polycarbonat-Polysiloxan-Blockcopolymeren ist Stand der Technik. Dies ist unter anderem in EP-A-0 764 676 und US-A-5 608 026 beschrieben. So hergestellte Polycarbonat-Polysiloxan-Blockcopolymere enthalten allerdings alle direkt miteinander verbundene Carbonatsegmente der folgenden allgemeinen Struktur 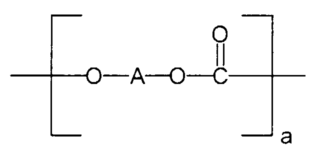 worin A einen divalenten verzweigten oder linearen, aliphatischen, cycloaliphatischen oder aromatischen, gegebenenfalls noch Heteroatome enthaltenden, organischen Rest und a eine Zahl von wenigstens 3 bedeuten.

Das im Regelfall durch nucleophile Substitution von Diolen an Phosgen oder an cyclische Carbonate erhaltene Polycarbonatsegment ist aber immer ein wesentlicher Bestandteil des Gesamtmoleküls, um ein gewünschtes Eigenschaftsbild zu erreichen.

Gegenstand der vorliegenden Erfindung sind dagegen Carbonatgruppen enthaltende, mit linearen Polyestern modifizierte Polysiloxane der folgenden Formel I 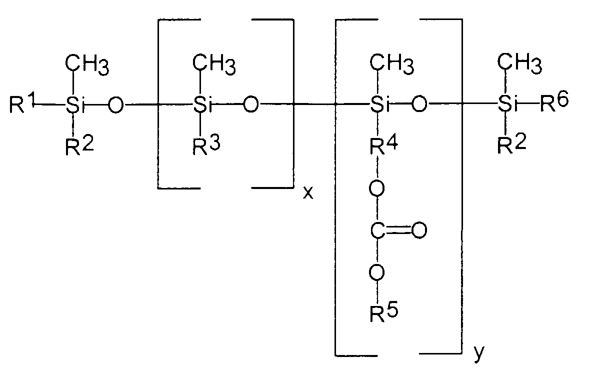 wobei
- R¹: = CH₃ oder R⁴―O―CO―OR⁵,
- R²: = CH₃ oder R³,
- R³: = Alkylgruppe mit 1 bis 24 Kohlenstoffatomen, wobei bis zu 25 Mol-% dieser Alkylgruppen ersetzt sein können durch Phenyl- und/oder Phenyl-Alkenylgruppen, wobei die Alkenylgruppen 2 bis 4 Kohlenstoffatome enthalten können,
- R⁴: = (CH₂)ₙ oder (CH₂)ₙ―O―(CH₂)ₘ bedeuten, n, m = 2 bis 20,
- R⁵: = eine mindestens drei -CO-O- und/oder -O-CO-Gruppen enthaltende aliphatische und/oder cycloaliphatische und/oder aromatische Polyestergruppe mit höchstens einem Zerewittinoff-Wasserstoffatom und einem mittleren Molekulargewicht Mₙ von 200 bis 5000,
- R⁶: = CH₃ oder R⁴―O―CO―O―R⁵ bedeuten,
- x: = 3 bis 300 und y = 0 bis 50 sind,
und wobei das durchschnittliche Molekül mindestens eine Gruppe R⁴―O―CO―O―R⁵ enthält und die Zahl der Gruppen R⁴-O-CO-O―R⁵ zu der Zahl x im Verhältnis 1 : 2 bis 1 : 50 steht.

Vorzugsweise bedeutet R¹ Alkylgruppen mit 1 bis 18 Kohlenstoffatomen.

Weiterhin ist bevorzugt, daß in den Gruppen R⁵ die Gruppen CO-O- und/oder -O-CO- durch zweiwertige, gegebenenfalls Ethergruppen enthaltende Kohlenwasserstoffgruppen mit 2 bis 12 Kohlenstoffatomen verbunden sind.

Ein weiterer Gegenstand der Erfindung sind (Meth)acryloylgruppen enthaltende, mit linearen Polyestern modifizierte Polysiloxane, welche erhältlich sind durch vorzugsweise enzymatisch katalysierte Ver- oder Umesterung der obengenannten modifizierten Siloxane mit (Meth)acrylsäure bzw. (Meth)acrylsäurederivaten sowie deren Verwendung als Zusatzmittel für strahlenhärtende Beschichtungsstoffe.

Weiterhin ist Gegenstand der Erfindung die Verwendung von Carbonatgruppen enthaltenden, mit linearen Polyestern modifizierten Polysiloxanen als Zusatzmittel für Beschichtungen.

Die wesentlichen Eigenschaften der erfindungsgemäßen mit linearen Polyestern modifizierten Polysiloxane werden also durch die Wahl der Organopolysiloxane und der linearen Polyester bestimmt. Der Kohlensäureester dient als universelles Verknüpfungsglied, mit den oben und im Anschluß beschriebenen besonderen Vorteilen.

Erfindungsgemäß hat der zur Verknüpfung verwendete Kohlensäureester folgende allgemeine Struktur 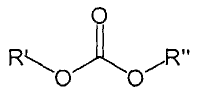 wobei R' und R'' gleich oder verschieden sein können und einen organischen Rest mit 1 bis 24 Kohlenstoffatomen bedeuten können.

Ebenso kann der erfindungsgemäß verwendete Kohlensäureester folgender allgemeiner cyclischer Struktur sein 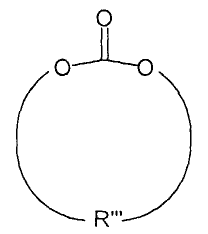 wobei R''' einen organischen Rest mit 1 bis 24 Kohlenstoffatomen bedeuten kann.

Um die erfindungsgemäß beschriebenen Carbonatgruppen enthaltenden, mit linearen Polyestern modifizierten Polysiloxane herzustellen, können funktionelle Siloxane, wie sie zum Beispiel durch die nachfolgenden Formeln beispielhaft verdeutlicht sind, zur Reaktion gebracht werden.

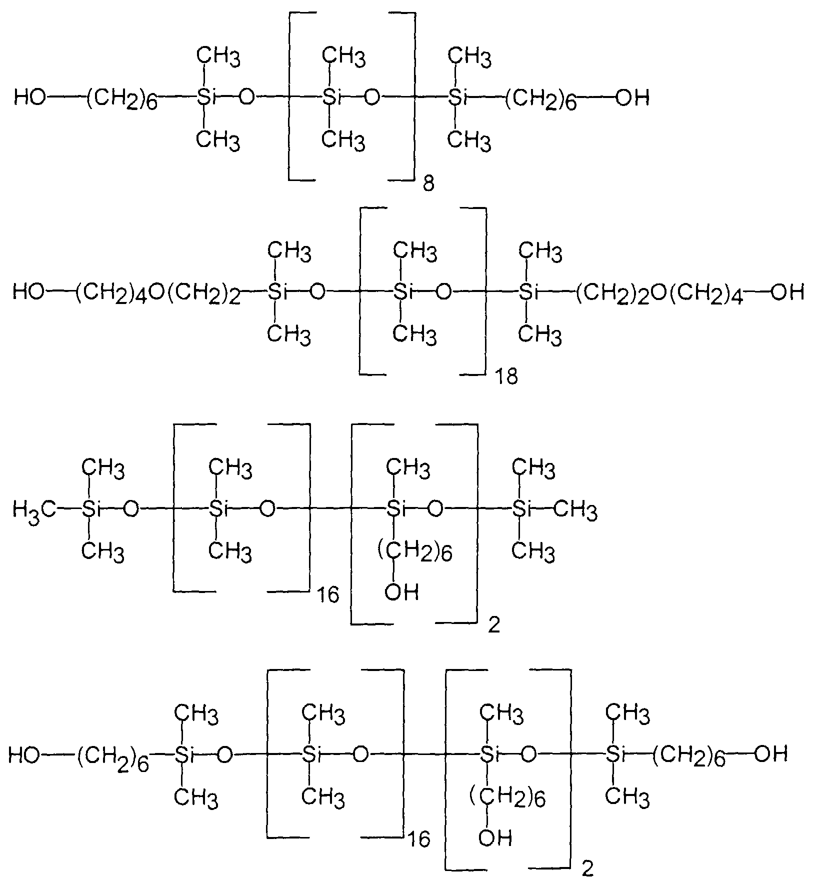

Als Polyesterkomponente können kommerziell wohlfeile, durch die bekannte Kondensationsreaktion von Diolen und Dicarbonsäuren bzw. deren Derivaten erhältliche, α,ω-hydroxyfunktionelle lineare Polyester verwendet werden. Solche Produkte sind beispielsweise unter den Handelsnamen Oxyester® (Hüls), Desmophen® (Bayer AG) und Fomrez® (Witco) erhältlich. Aber auch α,ω-hydroxyfunktionelle lineare Polyester, wie sie zum Beispiel durch die nachfolgende Formel beispielhaft verdeutlicht sind, 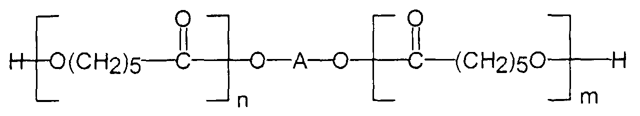 worin A einen divalenten organischen Rest bedeutet, können zur Reaktion gebracht werden. Diese Polyester werden zum Beispiel unter den Handelsnamen Placcel®-200 (Daicel Chemical Industries, Ltd.), Capa® (Interox) und Tone® (Union Carbide Corp.) kommerziell angeboten.

Somit kann man aus einer Vielzahl leicht verfügbarer oder auch im Bedarfsfall problemlos selbst herstellbarer Polyester gemäß spezifischer anwendungstechnischer Anforderungen diejenigen Rohstoffe bzw. deren Kombinationen auswählen, die zu für den jeweiligen Verwendungszweck maßgeschneiderten anwendungstechnischen Eigenschaften führen.

Aufgrund der Reaktivität der Kohlensäureester verläuft die Reaktion sehr gleichmäßig und führt stets zu homogenen Produkten. Die Möglichkeit, bei Temperaturen um 115 °C zu arbeiten, hat besondere Vorteile mit Bezug auf die besonders geringe Eigenfärbung so gewonnener Carbonatgruppen enthaltender, mit linearen Polyestern modifizierter Polysiloxane, wie es auch für anspruchsvolle, unpigmentierte Beschichtungen gefordert wird.

So hergestellte Carbonatgruppen enthaltende, mit linearen Polyestern modifizierte Polysiloxane verfügen zunächst über endständige Hydroxylgruppen, die optional weiter zur Reaktion gebracht werden können. Dies kann durch an sich bekannte Verfahren, wie zum Beispiel durch Umsetzung mit gesättigten oder ungesättigten Carbonsäuren und ihren Derivaten, Isocyanaten, Silylierungsreagenzien oder Alkylenoxiden, durchgeführt werden, wie dies beispielsweise in DE-A-35 35 283 beschrieben wird.

Diese weitere Modifizierung kann mit dem Zweck geschehen, reaktive Derivate der erfindungsgemäßen Verbindungen zu erzeugen, die in Beschichtungsstoffe dauerhaft mit einreagieren können, wie dies zum Beispiel durch die Bildung eines (Meth)acrylsäureesters im Falle von strahlenhärtenden Beschichtungen erreicht werden kann. Die Herstellung solcher (Meth)acrylsäureester kann besonders vorteilhaft durch Ver- und Umesterungsreaktionen mit (Meth)acrylsäure und ihren Alkylestern an hydroxyfunktionelle Carbonatgruppen enthaltende, mit linearen Polyestern modifizierte Polysiloxane erfolgen. Neben den dem Stand der Technik entsprechenden Katalysatoren können dazu auch besonders vorteilhaft Enzyme, die eine Ver- und/oder Umesterung fördern, als Katalysatoren eingesetzt werden.

Alternativ kann natürlich eine weitere Modifizierung auch gerade mit dem Ziel verfolgt werden, eine Reaktion der erfindungsgemäßen Verbindungen mit anderen Formulierungsbestandteilen durch die Absättigung der Hydroxygruppen mit dem Beschichtungsstoff zu vermeiden, wie dies beispielsweise durch die Bildung eines Essigsäureesters erreicht werden kann. Derartige Modifizierungen werden zum Beispiel in DE-A-34 27 208 beschrieben.

Je nach Art der Endgruppenmodifizierung können die anwendungstechnischen Eigenschaften, wie zum Beispiel Überlackierbarkeit, in einem weiten Bereich variiert werden, wie dies auch beispielhaft in den nachfolgenden Untersuchungen gezeigt wird.

Die Menge der den Beschichtungen zugesetzten Carbonatgruppen enthaltenden, mit linearen Polyestern modifizierten Polysiloxane, um den gewünschten Effekt der Förderung des Verlaufs und der Erhöhung der Gleitfähigkeit zu erreichen, kann sehr gering sein. So zeigen zum Beispiel schon Dosierungen von 0,01 Gew.-%, bezogen auf das Gesamtgewicht der Beschichtungen, einen ausreichenden Effekt. Bevorzugte Einsatzkonzentrationen liegen jedoch zwischen 0,05 und 5 Gew.-%, bezogen auf das Gesamtgewicht der Beschichtungen.

Die folgenden Beispiele erläutern die vorliegende Erfindung. Insbesondere die in den Tabellen angegeben Werte zeigen, daß die erfindungsgemäßen Produkte gegenüber den Produkten des Standes der Technik nicht nur mit Bezug auf die variable Synthesestrategie unter Ausnützung des Kohlensäureesters als Bindeglied Vorteile bieten, sondern in der Summe ihrer Eigenschaften auch anwendungstechnisch überlegen sind.

### Herstellungsbeispiele

### Beispiel 1

In einem Reaktionsgefäß, mit Rührer, Kolonne und Kolonnenkopf versehen, werden 158 g Toluol, 44,9 g (50 mMol) eines Polysiloxans der mittleren Durchschnittsformel 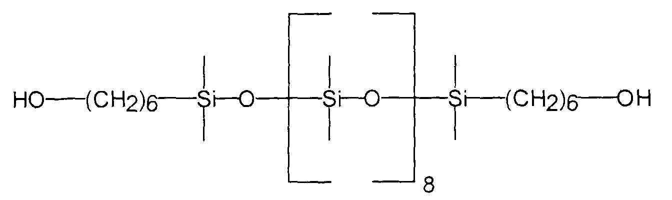 mit 101,1 g (100 mMol) Desmophen® 1695 (Handelsprodukt der Fa. Bayer AG, linearer α,ω-OH-funktioneller Polyester auf Basis Adipinsäure/Hexandiol, OHZ = 111 mg KOH/g) und 11,9 g (100 mMol) Diethylcarbonat versetzt und auf 115 °C erhitzt. Man gibt portionsweise 1.6 g (1 Gew.-% bezogen auf Edukte) Titantetraisopropylat hinzu. Innerhalb von 10 Stunden Reaktionszeit werden insgesamt 72 g eines Toluol/Ethanolgemischs abdestilliert. Die Reaktionsmischung ist dann völlig homogen. Man kühlt auf 50 °C ab und gibt 25 g einer 20 %igen wäßrigen Lösung von Dinatriumhydrogenphosphat hinzu und läßt 15 Minuten rühren. Anschließend werden Wasser und Toluol abdestilliert und das Produkt bei Raumtemperatur filtriert. Man erhält 119 g eines klaren, farblosen mit Organopolysiloxan modifizierten linearen Polyesters. Die spektroskopischen Daten (¹H-, ¹³C-, ²⁹Si-NMR) entsprechen den Erwartungen. Mittels GPC werden M_{w} = 4839 und Mₙ = 2082 D bestimmt.

### Beispiel 2

27,5 g des gemäß Beispiel 1 erhaltenen, mit Organopolysiloxan modifizierten, linearen Polyesters (OH-Zahl = 52 mg KOH/g) werden in 54 g Toluol gelöst und auf 45 °C erwärmt. Man gibt 4,7 g Essigsäureanhydrid hinzu und läßt zwei Stunden bei 60 °C rühren. Nach Anlegen von Vakuum (6 mm Hg) destilliert man 90 Minuten bis zu einer Sumpftemperatur von 120 °C entstandene Essigsäure, überschüssiges Essigsäureanhydrid und Toluol ab. Man erhält 28 g eines klaren, farblosen mit Organopolysiloxan modifizierten linearen Polyesters. Das so erhaltene Produkt weist gemäß ¹H-NMR einen Acetylierungsgrad von 70 % auf.

### Beispiel 3

In einem Reaktionsgefäß, mit Rührer, Kolonne und Kolonnenkopf versehen, werden 314 g Toluol, 157,0 g (175 mMol) eines Polysiloxans der mittleren Durchschnittsformel 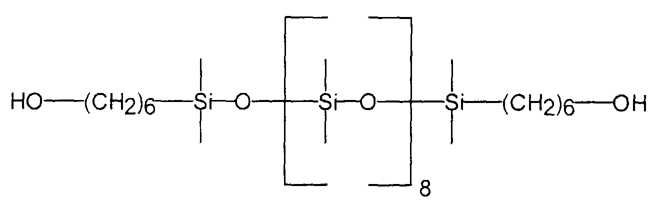 mit 184,5 g (350 mMol) Capa® 200 (Handelsprodukt der Fa. Solvay AG, linearer α,ω-OH-funktioneller Polyester auf Basis ε-Caprolacton, OHZ = 213 mg KOH/g) und 41,4 g (350 mMol) Diethylcarbonat versetzt und auf 115 °C erhitzt. Man gibt portionsweise 5,7 g (1,5 Gew.-% bezogen auf Edukte) Titantetraisopropylat hinzu. Innerhalb von 13 Stunden Reaktionszeit werden insgesamt 79 g eines Toluol/Ethanolgemischs abdestilliert. Die Reaktionsmischung ist dann völlig homogen. Man kühlt auf 60 °C ab und gibt 50 g einer 20 %igen wäßrigen Lösung von Dinatriumhydrogenphosphat hinzu und läßt 15 Minuten rühren. Anschließend werden Wasser und Toluol abdestilliert und das Produkt bei Raumtemperatur filtriert. Man erhält 335 g eines klaren, farblosen mit Organopolysiloxan modifizierten linearen Polyesters. Die spektroskopischen Daten (¹H-, ¹³C-NMR) entsprechen den Erwartungen. Mittels GPC werden M_{w} = 7752 und Mₙ = 3735 D bestimmt.

### Beispiel 4

80 g des gemäß Beispiel 3 erhaltenen, mit Organopolysiloxan modifizierten linearen Polyesters (OH-Zahl = 52 mg KOH/g) werden in 80 g Toluol gelöst und auf 45 °C erwärmt. Man gibt 16,0 g Essigsäureanhydrid hinzu und läßt 6 Stunden bei 100 °C rühren. Nach Anlegen von Vakuum (3 mm Hg) destilliert man 90 Minuten bis zu einer Sumpftemperatur von 100 °C entstandene Essigsäure, überschüssiges Essigsäureanhydrid und Toluol ab. Man erhält 83 g eines klaren, farblosen, mit Organopolysiloxan modifizierten linearen Polyesters. Das so erhaltene Produkt weist gemäß ¹H-NMR einen Acetylierungsgrad von 97 % auf.

### Anwendungsbeispiele

Die in den Beispielen 1 bis 4 aufgeführten, mit linearen Polyestern modifizierten erfindungsgemäßen Polysiloxane werden in den nachfolgend aufgeführten zwei praxisgerechten Lacksystemen 1 bis 2 geprüft, wobei man feststellt, daß bereits Zusätze von 0,01 % bis 2 %, vorzugsweise jedoch kleiner 1 %, dieser mit linearen Polyestern modifizierten Polysiloxane den gewünschten Effekt zeigen.

Vergleichend hierzu werden drei weitere Siloxanpolymere 1, 2 und 3 geprüft.
- Siloxanpolymer 1: = Polycaprolacton-Polysiloxan-Copolymer, erhalten durch direkte Anlagerung von ε-Caprolacton an Hydroxyalkylpolysiloxan
- Siloxanpolymer 2: = Polyoxyalkylen-Polysiloxan-Copolymer
- Siloxanpolymer 3: = Kondensationsprodukt aus einem α,ω-Alkoxypolysiloxan und einem Polyester auf Basis Hexandiol/Adipinsäure

Als Prüfkriterien werden die Reduzierung des Gleitwiderstandes und die Zwischenlagenhaftung geprüft. Die Messung des Gleitwiderstandes wird mittels eines kommerziell erhältlichen Gerätes der Fa. Altec durchgeführt. Der Gleitwiderstand wird in Centinewton (cN) angegeben. Die Zwischenlagenhaftung wird durch Überlackieren mittels Kastenrakel (50 µm) und anschließendem Gitterschnitt beurteilt.

### Ausprüfungen in Lacksystem 1

### Verwendet wird ein praxisgerechter Klarlack mit folgender Rezeptur:

| | |
|---|---|
| Uralac SN 808 S2G3-50 (DSM Resins, BV) | 75,5 Gew.-% |
| Uramex BF 892 (DSM Resins, BV) | 12,0 Gew.-% |
| Solvesso 150 | 10,0 Gew.-% |
| Butylglykol | 2,5 Gew.-% |

Die Zusatzstoffe werden mit einem Wirkstoffgehalt von 0,1 Gew.-%, bezogen auf die Gesamtrezeptur, eingearbeitet (2 Minuten bei 2000 U/min) und auf Aluminiumbleche mit einer Naßfilmdicke von 24 µm aufgerakelt. Die Filme werden zunächst 5 Minuten bei 20 °C und anschließend 10 Minuten bei 180 °C getrocknet. Die Filmdicke nach der Trocknung beträgt zwischen 5 und 7 µm.

Überlackiert wird unter Erhalt der Appilkations- und Trockenbedingungen.

### Ergebnisse:

| Probe | Trübung | Haftung 1. Aufzug | Slip (Altec) [cN] | Haftung 2. Aufzug | Gitterschnitt |
|---|---|---|---|---|---|
| ohne Zusatzstoff | klar | i.O. | 226 | i.O. | 0 |
| Beispiel 1 | klar | i.O. | 54 | i.O. | 0 |
| Beispiel 2 | klar | i.O. | 49 | i.O. | 0 |
| Beispiel 3 | klar | i.O. | 45 | i.O. | 0 |
| Beispiel 4 | klar | i.O. | 34 | i.O. | 0 |
| Siloxan-polymer 1 | klar | i.O. | 84 | i.O. | 0 |
| Siloxan-polymer 2 | klar | i.O. | 34 | i.O. | 0-1 |
| Siloxan-polymer 3 | leicht trübe | i.O. | 116 | i.O. | 0 |

### Bewertung:

- Gitterschnitt:: 0 = gute Haftung, kein Abplatzen
1 = nur stellenweise leichtes Abplatzen
2 = allgemein leichtes Abplatzen
3 = mittleres Abplatzen
4 = starkes Abplatzen
5 = praktisch keine Haftung mehr

### Ausprüfungen in Lacksystem 2

Verwendet wird ein praxisgerechter pigmentierter Coil Coating-Lack mit folgender Rezeptur:

| | |
|---|---|
| Synolac 153 S; 60 %ig in Solvesso 150 (Cray Valley) | 38,8 Gew.-% |
| Kronos 2310 (Kronos) | 29,4 Gew.-% |
| Maprenal MF 980/62B (Hoechst AG) | 10,6 Gew.-% |
| Solvesso 150 | 17,0 Gew.-% |
| Butylglykol | 4,2 Gew.-% |

Die Zusatzstoffe werden mit einem Wirkstoffgehalt von 0,2 Gew.-%, bezogen auf die Gesamtrezeptur, eingearbeitet (2 Minuten bei 2000 U/min) und auf Aluminiumbleche mit einer Naßfilmdicke von 24 µm aufgerakelt. Die Filme werden 5 Minuten bei 250 °C getrocknet. Die Filmdicke nach der Trocknung beträgt zwischen 9 und 12 µm.

Überlackiert wird unter Erhalt der Applikations- und Trockenbedingungen.

### Ergebnisse:

| Probe | Haftung 1. Aufzug | Slip (Altec) [cN] | Haftung 2. Aufzug | Gitterschnitt |
|---|---|---|---|---|
| Beispiel 1 | i.O. | 53 | schlecht | 2-3 |
| Beispiel 2 | i.O. | 48 | i.O. | 0 |
| Beispiel 3 | i.O. | 55 | keine Haftung | 5 |
| Beispiel 4 | i.O. | 36 | i.O. | 0 |
| ohne Zusatzstoff | i.O. | 230 | i.O. | 0 |
| Siloxan-polymer 1 | i.O. | 126 | i.O. | 0 |
| Siloxan-polymer 2 | i.O. | 47 | keine Haftung | 5 |
| Siloxan-polymer 3 | i.O. | 85 | i.O. | 0 |

### Bewertung:

- Gitterschnitt:: 0 = gute Haftung, kein Abplatzen
1 = nur stellenweise leichtes Abplatzen
2 = allgemein leichtes Abplatzen
3 = mittleres Abplatzen
4 = starkes Abplatzen
5 = praktisch keine Haftung mehr

Die anwendungstechnischen Ergebnisse zeigen, daß die erfindungsgemäßen Beispiele insbesondere die Gleitfähigkeit der mit ihnen versetzten Lacke drastisch erhöhen und in Abhängigkeit von der Wahl der eingesetzten Polyester- und Siloxankomponenten in Kombination mit der erfindungsgemäßen Verknüpfung derselben über Carbonatgruppen und der gezielten Wahl der Endgruppen der Carbonatgruppen enthaltenden, mit linearen Polyestern modifizierten Polysiloxane einzigartige anwendungstechnische Eigenschaften gezielt steuerbar zu erhalten sind.

Dies ist insbesondere bei den Ausprüfungen in Lacksystem 2 augenfällig zu sehen, wo die erfindungsgemäßen Beispiele 1 und 3, die endständige Hydroxylgruppen enthalten, zu einer deutlich verschlechterten Überlackierbarkeit führen. Die erfindungsgemäßen Beispiele 2 und 4, deren Grundstruktur mit der der Beispiele 1 und 3 identisch ist, haben dementgegen endständige Acetylgruppen und weisen eine problemlose Überlackierbarkeit auf. Beides kann anwendungstechnisch gewünscht und von Vorteil sein: ersteres zum Beispiel zur Herstellung sogenannter Anti-graffiti-Lacke, die also eine Benetzung mit weiteren Lackschichten erschweren oder unmöglich machen, das zweite im Hinblick auf die Herstellung von Mehrschichtlacksystemen oder einer beabsichtigten Bedruckung solcher Lacke.

Diese hier nachgewiesenen ausgeprägten Unterschiede in der Überlackierbarkeit sind, wie dem Fachmann geläufig ist, im wesentlichen von der Fähigkeit bzw. von der fehlenden Fähigkeit des Carbonatgruppen enthaltenden, mit linearen Polyestern modifizierten Polysiloxans abhängig, mit dem Beschichtungsstoff dauerhaft zu reagieren oder sich aber inert zu verhalten und sich damit durch die somit gesteigerte Mobilität stets an jeder auch neu gebildeten Oberfläche anzureichern.

Aufgrund des variablen Syntheseprinzips kann durch die gezielte Einführung auch reaktiver Gruppen, wobei insbesondere (Meth)acryloylgruppen hervorzuheben sind, der Einsatzbereich solcher Carbonatgruppen enthaltenden, mit linearen Polyestern modifizierten Polysiloxane vorteilhafterweise auch auf strahlenhärtende Beschichtungssysteme ausgedehnt werden. Dort reagiert eine solche erfindungsgemäße Verbindung dauerhaft mit dem Beschichtungsstoff und führt so zu einer permanenten Verankerung in der strahlenhärtenden Beschichtung.

## Patentansprüche

1. Carbonatgruppen enthaltende, mit linearen Polyestern modifizierte Polysiloxane der folgenden Formel I 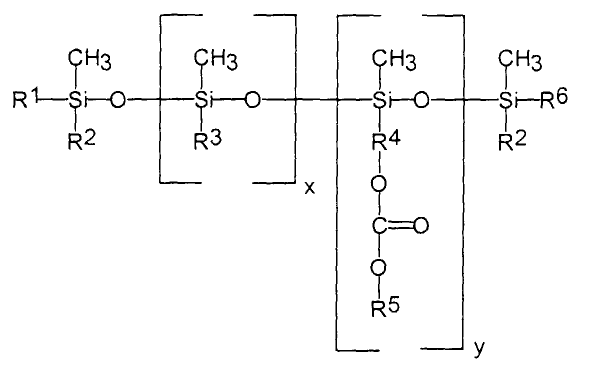 wobei
R¹ = CH₃ oder R⁴―O―CO―O―R⁵,
R² =CH₃ oder R³,
R³ = Alkylgruppe mit 1 bis 24 Kohlenstoffatomen, wobei bis zu 25 Mol-% dieser Alkylgruppen ersetzt sein können durch Phenyl- und/oder Phenyl-Alkenylgruppen, wobei die Alkenylyruppen 2 bis 4 Kohlenstoffatome enthalten können,
R⁴ = (CH₂)ₙ oder (CH₂)ₙ―O―(CH₂)ₘ bedeuten, n, m = 2 bis 20,
R⁵ = eine mindestens drei -CO-O- und/oder -O-CO-Gruppen enthaltende aliphatische und/oder cycloaliphatische und/oder aromatische Polyestergruppe mit höchstens einem Zerewittinoff-Wasserstoffatom und einem mittleren Molekulargewicht Mₙ von 200 bis 5000,
R⁶ = CH₃ oder R⁴―O―CO―O―R⁵ bedeuten,
x = 3 bis 300 und
y = 0 bis 50 sind,
und wobei das durchschnittliche Molekül mindestens eine Gruppe R⁴―O―CO―O―R⁵ enthält und die Zahl der Gruppen R⁴-O-CO-O―R⁵ zu der Zahl x im Verhältnis 1 : 2 bis 1 : 50 steht.

2. Carbonatgruppen enthaltende, mit linearen Polyestern modifizierte Polysiloxane nach Anspruch 1, dadurch gekennzeichnet, daß R¹ für Alkylgruppen mit 1 bis 18 Kohlenstoffatomen steht.

3. Carbonatgruppen enthaltende, mit linearen Polyestern modifizierte Polysiloxane nach den Ansprüchen 1 und 2, dadurch gekennzeichnet, daß in den Gruppen R⁵ die Gruppen CO-O-und/oder -O-CO- durch zweiwertige, gegebenenfalls Ethergruppen enthaltende Kohlenwasserstoffgruppen mit 2 bis 12 Kohlenstoffatomen verbunden sind.

4. (Meth)acryloylgruppen enthaltende, mit linearen Polyestern modifizierte Polysiloxane, erhältlich durch vorzugsweise enzymatisch katalysierte Ver- oder Umesterung der modifizierten Siloxane gemäß den Ansprüchen 1 bis 3 mit (Meth)acrylsäure bzw. (Meth)acrylsäurederivaten.

5. Verwendung von Carbonatgruppen enthaltenden, mit linearen Polyestern modifizierten Polysiloxanen gemäß den Ansprüchen 1 bis 4 als Zusatzmittel für Beschichtungen.

6. Verwendung der (Meth)acryloylgruppen enthaltenden, mit linearen Polyestern modifizierten Polysiloxane gemäß Anspruch 4 als Zusatzmittel für strahlenhärtende Beschichtungsstoffe.
